(19) Europäisches Patentamt
European Patent Office
Office européen des brevets

(11) EP 1 341 841 B1

(12) **EUROPÄISCHE PATENTSCHRIFT**

(45) Veröffentlichungstag und Bekanntmachung des Hinweises auf die Patenterteilung:
**14.09.2005 Patentblatt 2005/37**

(21) Anmeldenummer: **01999604.0**

(22) Anmeldetag: **26.11.2001**

(51) Int Cl.[7]: **C08K 3/32**, C08K 5/49, C08L 69/00

(86) Internationale Anmeldenummer:
**PCT/EP2001/013711**

(87) Internationale Veröffentlichungsnummer:
**WO 2002/046287 (13.06.2002 Gazette 2002/24)**

(54) **FLAMMWIDRIGE POLYCARBONAT-BLENDS**
FLAMEPROOF POLYCARBONATE BLENDS
MELANGES POLYCARBONATE IGNIFUGES

(84) Benannte Vertragsstaaten:
**AT BE CH CY DE DK ES FI FR GB GR IE IT LI LU MC NL PT SE TR**

(30) Priorität: **08.12.2000 DE 10061081**

(43) Veröffentlichungstag der Anmeldung:
**10.09.2003 Patentblatt 2003/37**

(73) Patentinhaber: **Bayer MaterialScience AG**
**51368 Leverkusen (DE)**

(72) Erfinder:
- **ECKEL, Thomas**
  **41540 Dormagen (DE)**
- **SEIDEL, Andreas**
  **41542 Dormagen (DE)**

(56) Entgegenhaltungen:
**WO-A-01/18117**
**DE-A- 19 801 198**
**DE-A- 19 828 536**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 341 841 B1

## Beschreibung

Die vorliegende Erfindung betrifft mit einer Kombination aus organischen Phosphorverbindungen und anorganischen Phosphor-Sauerstoffverbindungen oder Phosphor-Schwefelverbindungen ausgerüstete schlagzähmodifizierte Polycarbonat-Blends, die einen ausgezeichneten Flammschutz und verbessertes Spannungsrissverhalten (gegenüber Medien wie Lösungsmittel oder Fetten) aufweisen.

In EP-A 0 640 655 werden Formmassen aus aromatischem Polycarbonat, styrolhaltigen Copolymerisaten und Pfropfpolymerisaten beschrieben, die mit monomeren und/oder oligomeren organischen Phosphorverbindungen flammwidrig ausgerüstet werden können.

In EP-A 0 363 608 werden flammwidrige Polymermischungen aus aromatischem Polycarbonat, styrolhaltigem Copolymer oder Pfropfcopolymer sowie oligomeren organischen Phosphaten als Flammschutzadditve beschrieben.

In US-P 5 061 745 werden Polymermischungen aus aromatischem Polycarbonat, ABS-Pfropfpolymerisat und/oder styrolhaltigem Copolymer und organischen Monophosphaten als Flammschutzadditive beschrieben.

Eine Kombination aus organischen Phosphorverbindungen und anorganischen Phosphor-Sauerstoff-Verbindungen oder Phosphor-Schwefel-Verbindungen wird dort nicht beschrieben. Allen zitierten Anmeldungen gemeinsam ist, dass zur Erzielung eines exzellenten Flammschutzes mit sehr kurzen Nachbrennzeiten, sehr große Mengen an Phosphaten eingesetzt werden müssen, die sich negativ auf das Spannungsrissverhalten der entsprechenden Formmassen auswirken. Die Forderung nach einer Eigenschaftskombination aus hervorragender Flammwidrigkeit und sehr gutem Spannungsrissverhalten entspricht besonders der Forderung nach immer dünneren Wandstärken der Formteile.

Aufgabe der vorliegenden Erfindung ist die Bereitstellung von Polycarbonat-Zusammensetzungen mit einer verbesserten Flammfestigkeit und verbessertem Spannungsrissverhalten im Kontakt mit Medien wie beispielsweise Fetten, Ölen oder Lösungsmittel. Dieses Eigenschaftsspektrum wird besonders bei Anwendungen im Bereich Datentechnik wie etwa für Gehäuse von Monitoren, Druckern, Printern, Kopierern, Notebooks usw. gefordert.

Es wurde nun gefunden, dass Polycarbonat-Zusammensetzungen, die eine Kombination aus organischen Phosphorverbindungen und anorganischen Phosphor-Sauerstoff-Verbindungen als Flammschutzmittel enthalten, die gewünschten Eigenschaften aufweisen.

Gegenstand der Erfindung sind daher Zusammensetzungen enthaltend

A) aromatisches Polycarbonat und/oder Polyestercarbonat

B) Schlagzähmodifikator

C) gegebenenfalls thermoplastisches Homo- und/oder Copolymer

D) eine Kombination von

  D.1 Phosphorverbindung und

  D.2 Phosphor-oxid verschieden von D.1 oder Phosphor-sulfid veschieden von D.1 oder das Reaktionsprodukt von D.1 und D.2.

Komponente D ist bevorzugt in einer Menge von 0,1 bis 30 Gew.-Teilen (bezogen auf die Gesamtzusammensetzung) enthalten. Vorzugsweise enthält Komponente D.2 ein Phosphor-oxid.

Gegenstand der Erfindung sind vorzugsweise Blends enthaltend

A) 40 bis 99, vorzugsweise 60 bis 98,5 Gew.-Teile aromatisches Polycarbonat und/oder Polyestercarbonat

B) 0,5 bis 60, vorzugsweise 1 bis 40, insbesondere 2 bis 25 Gew.-Teile Pfropfpolymerisat von

  B.1) 5 bis 95, vorzugsweise 30 bis 80 Gew.-% eines oder mehrerer Vinylmonomeren auf

  B.2) 95 bis 5, vorzugsweise 20 bis 70 Gew.-% einer oder mehrerer Pfropfgrundlagen mit einer Glasumwandlungstemperatur <10°C, vorzugsweise <0°C, besonders bevorzugt < -20°C,

C) 0 bis 45, vorzugsweise 0 bis 30, besonders bevorzugt 2 bis 25 Gew.-Teile mindestens eines thermoplastischen Polymers, ausgewählt aus der Gruppe der Vinyl(co)polymerisate und Polyalkylenterephthalate,

D) 0,1 bis 30 Gew.-Teile, vorzugsweise 1 bis 25 Gew.-Teile, besonders bevorzugt 2 bis 20 Gew.-Teile einer Kombination aus

D.1) organische Phosphorverbindung und

D.2) ein von D.1 verschieden Phosphor-oxid oder Phosphor-sulfid sowie

E) 0 bis 5, vorzugsweise 0,1 bis 3, besonders bevorzugt 0,1 bis 1 Gew.-Teile, insbesondere 0,1 bis 0,5 Gew.- Teile fluoriertes Polyolefin,

wobei die Summe der Gew.-Teile der Komponenten A-E 100 ergibt.

**Komponente A**

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-A 1 495 626, DE-A 2 232 877, DE-A 2 703 376, DE-A 2 714 544, DE-A 3 000 610, DE-A 3 832 396; zur Herstellung aromatischer Polyestercarbonate z. B. DE-A 3 077 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigem, beispielsweise Triphenolen oder Tetraphenolen.

Diphenole zur Herstellung der aromatischen Polycarbonate und/oder aromatischen Polyestercarbonate sind vorzugsweise solche der Formel (I)

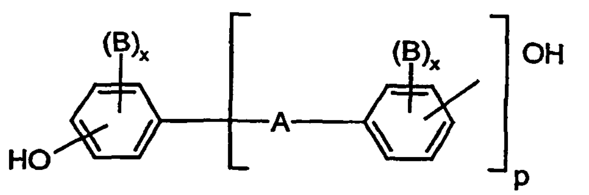

(I),

wobei

A eine Einfachbindung, $C_1$-$C_5$-Alkylen, $C_2$-$C_5$-Alkyliden, $C_5$-$C_6$-Cycloalkyliden, -O-, -SO-, -CO-, -S-, $-SO_2-$, $C_6$-$C_{12}$-Arylen, an das weitere aromatische gegebenenfalls Heteroatome enthaltende Ringe kondensiert sein können, oder ein Rest der Formel (IIa) oder (IIb)

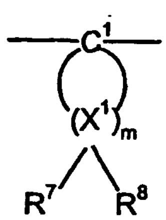

(IIa)

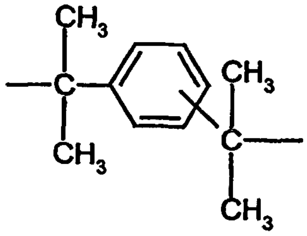

(IIb)

wobei

| | |
|---|---|
| B | jeweils $C_1$-$C_{12}$-Alkyl, vorzugsweise Methyl, Halogen, vorzugsweise Chlor und/oder Brom |
| x | jeweils unabhängig voneinander 0, 1 oder 2, |
| p | 1 oder 0 sind, und |
| $R^7$ und $R^8$ | für jedes $X^1$ individuell wählbar, unabhängig voneinander Wasserstoff oder $C_1$-$C_6$-Alkyl, vorzugsweise Wasserstoff, Methyl oder Ethyl, |
| $X^1$ | Kohlenstoff und |
| m | eine ganze Zahl von 4 bis 7, bevorzugt 4 oder 5 bedeuten, mit der Maßgabe, dass an mindestens einen Atom $X^1$, $R^7$ und $R^8$ gleichzeitig Alkyl sind. |

Bevorzugte Diphenole sind Hydrochinon, Resorcin, Dihydroxydiphenole, Bis-(hydroxyphenyl)-$C_1$-$C_5$-alkane, Bis-(hydroxyphenyl)-$C_5$-$C_6$-cycloalkane, Bis-(hydroxyphenyl)-ether, Bis-(hydroxylphenyl)-sulfoxide, Bis-(hydroxyphenyl)-ketone, Bis-(hydroxyphenyl)-sulfone und $\alpha,\alpha$-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenyl-sulfon sowie deren di- und tetrabromierten oder chlorierten Derviate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan.

Insbesondere bevorzugt ist 2,2-Bis-(4-hydroxyphenyl)-propan (Bisphenol-A).

Es können die Diphenole einzeln oder als beliebige Mischungen eingesetzt werden.

Die Diphenole sind literaturbekannt oder nach literaturbekannten Verfahren erhältlich.

Für die Herstellung der thermoplastischen, aromatischen Polycarbonate sind geeignete Kettenabbrecher beispielsweise Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-A 2 842 005 oder Monoalkylphenol bzw. Dialkylphenole mit insgesamt 8 bis 20 C-Atomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 mol-%, und 10 mol-%, bezogen auf die Molsumme der jeweils eingesetzten Diphenole.

Die thermoplastischen, aromatischen Polycarbonate haben mittlere Gewichtsmittelmolekulargewichte ($M_w$, gemessen z. B. durch Ultrazentrifuge oder Streulichtmessung) von 10 000 bis 200 000, vorzugsweise 20 000 bis 80 000.

Die thermoplastischen, aromatischen Polycarbonate können in bekannter Weise verzweigt sein, und zwar vorzugsweise durch den Einbau von 0,05 bis 2,0 mol-%, bezogen auf die Summe der eingesetzten Diphenole, an trifunktionellen oder mehr als trifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.-%, vorzugsweise 2,5 bis 25 Gew.-% (bezogen auf die Gesamtmenge an einzusetzenden Diphenolen) Polydiorganosiloxane mit Hydroxy-aryloxy-Endgruppen eingesetzt werden. Diese sind bekannt (s. beispielsweise US-Patent 3 419 634) bzw. nach literaturbekannten Verfahren herstellbar. Die Herstellung Polydiorganosiloxanhaltiger Copolycarbonate wird z. B. in DE-A 3 334 782 beschrieben.

Bevorzugte Polycarbonate sind neben den Bisphenol-A-Homopolycarbonaten die Copolycarbonate von Bisphenol-A mit bis zu 15 mol-%, bezogen auf die Molsummen an Diphenolen, anderen als bevorzugt bzw. besonders bevorzugt genannten Diphenole, insbesondere 2,2-Bis(3,5-dibrom-4-hydroxyphenyl)-propan.

Aromatische Dicarbonsäuredihalogenide zur Herstellung von aromatischen Polyestercarbonate sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen als bifunktionelles Säurederivat mitverwendet

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch $C_1$-$C_{22}$-Alkylgruppen oder durch Halogenatome substituiert sein können, sowie aliphatische $C_2$-$C_{22}$-Monocarbonsäurechloride in Betracht

Die Menge an Kettenabbrechern beträgt jeweils 0,1 bis 10 mol-%, bezogen im Falle der phenolischen Kettenabbrecher auf Mole Diphenole und Falle von Monocarbonsäurechlorid-Kettenabbrecher auf Mole Dicarbonsäuredichloride.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu ebenfalls DE-A 2 940 024 und DE-A 3 007 934).

Als Verzweigungsmittel können beispielsweise 3- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbonsäuretetrachlorid oder Pyromellithsäuretetrachlorid, in Mengen von 0,01 bis 1,0 mol-% (bezogen auf eingesetzte Dicarbonsäuredichloride) oder 3- oder mehrfunktionelle Phenole, wie Phloroglucin, 4,6-Dimethyl-2,4,6-tri-(4-hydroxyphenyl)-hepten-2,4,4-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methylphenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 mol-% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 mol-%, insbesondere bis zu 80 mol-%, besonders bevorzugt bis zu 50 mol-%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität ($\eta_{rel}$) der aromatischen Polycarbonate und Polyester-carbonate liegt im Bereich 1,18 bis 1,4, vorzugsweise 1,22 bis 1,3 (gemessen an Lösungen von 0,5 g Polycarbonat oder Polyestercarbonat in 100 ml Methylenchlorid-Lösung bei 25°C).

Die thermoplastischen, aromatischen Polycarbonate und Polyestercarbonate können allein oder im beliebigen Gemisch untereinander eingesetzt werden.

**<u>Komponente B</u>**

Die Komponente B umfasst ein oder mehrere Pfropfpolymerisate von

B.1 5 bis 95, vorzugsweise 30 bis 80 Gew.-%, wenigstens eines Vinylmonomeren auf

B.2 95 bis 5, vorzugsweise 70 bis 20 Gew.-% einer oder mehrerer Pfropfgrundlagen mit Glasübergangstemperaturen < 10°C, vorzugsweise < 0°C, besonders bevorzugt < -20°C.

Die Pfropfgrundlage B.2 hat im allgemeinen eine mittlere Teilchengröße ($d_{50}$-Wert) von 0,05 bis 5 μm, vorzugsweise 0,10 bis 0,5 μm, besonders bevorzugt 0,20 bis 0,40 μm.

Monomere B.1 sind vorzugsweise Gemische aus

B.1.1 50 bis 99 Gew.-Teilen Vinylaromaten und/oder kernsubstituierten Vinylaromaten (wie beispielsweise Styrol, α-Methylstyrol, p-Methylstyrol, p-Chlorstyrol) und/oder Methacrylsäure-($C_1$-$C_4$)-Alkylester (wie z.B. Methylmethacrylat, Ethylmethacrylat) und

B.1.2 1 bis 50 Gew.-Teilen Vinylcyanide (ungesättigte Nitrile wie Acrylnitril und Methacrylnitril) und/oder (Meth)

Acrylsäure-($C_1$-$C_8$)-Alkylester (wie z.B. Methylmethacrylat, n-Butylacrylat, t-Butylacrylat) und/oder Derivate (wie Anhydride und Imide) ungesättigter Carbonsäuren (beispielsweise Maleinsäureanhydrid und N-Phenyl-Maleinimid).

Bevorzugte Monomere B.1.1 sind ausgewählt aus mindestens einem der Monomere Styrol, α-Methylstyrol und Methylmethacrylat, bevorzugte Monomere B.1.2 sind ausgewählt aus mindestens einem der Monomere Acrylnitril, Maleinsäureanhydrid und Methylmethacrylat.

Besonders bevorzugte Monomere sind B.1.1 Styrol und B.1.2 Acrylnitril.

Für die Pfropfpolymerisate B geeignete Pfropfgrundlagen B.2 sind beispielsweise Dienkautschuke, EP(D)M-Kautschuke, also solche auf Basis Ethylen/Propylen und weiterhin Acrylat-, Polyurethan-, Silikon-, Chloropren und Ethylen/Vinylacetat-Kautschuke.

Bevorzugte Pfropfgrundlagen B.2 sind Dienkautschuke (z. B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß B.1.1 und B.1.2), mit der Maßgabe, dass die Glasübergangstemperatur der Komponente B.2 unterhalb <10°C, vorzugsweise <0°C, besonders bevorzugt <-10°C liegt.

Besonders bevorzugt ist reiner Polybutadienkautschuk.

Besonders bevorzugte Polymerisate B sind z.B. ABS-Polymerisate (Emulsions-, Masse- und Suspensions-ABS), wie sie z. B. in der DE-A 2 035 390 (=US-A 3 644 574) oder in der DE-A 2 248 242 (=GB-A 1 409 275) bzw. in Ullmann, Enzyklopädie der Technischen Chemie, Bd. 19 (1980), S. 280 ff. beschrieben sind. Der Gelanteil der Pfropfgrundlage B.2 beträgt mindestens 30 Gew.-%, vorzugsweise mindestens 40 Gew.-% (in Toluol gemessen).

Die Pfropfcopolymerisate B werden durch radikalische Polymerisation, z.B. durch Emulsions-, Suspensions-, Lösungs- oder Massepolymerisation, vorzugsweise durch Emulsionspolymerisation hergestellt

Besonders geeignete Pfropfkautschuke sind auch ABS-Polymerisate, die durch Redox-Initiierung mit einem Initiatorsystem aus organischem Hydroperoxid und Ascorbinsäure gemäß US-A 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B nur solche Produkte verstanden, die durch Pfropfpolymerisation der Pfropfmonomere in Gegenwart der Pfropfgrundlage gewonnen werden.

Geeignete Acrylatkautschuke gemäß B.2 der Polymerisate B sind vorzugsweise Polymerisate aus Acrylsäurealkylestern, gegebenenfalls mit bis zu 40 Gew.-%, bezogen auf B.2 anderen polymerisierbaren, ethylenisch ungesättigten Monomeren. Zu den bevorzugten polymerisierbaren Acrylsäureestern gehören $C_1$-$C_8$-Alkylester, beispielsweise Methyl-, Ethyl-, Butyl-, n-Octyl- und 2-Ethylhexylester; Halogenalkylester, vorzugsweise Halogen-$C_1$-$C_8$-alkylester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage B.2.

Bei cyclischen vernetzenden Monomeren mit mindestens 3 ethylenisch ungesättigten Gruppen ist es vorteilhaft, die Menge auf unter 1 Gew.-% der Pfropfgrundlage B.2 zu beschränken.

Bevorzugte "andere" polymerisierbare, ethylenisch ungesättigte Monomere, die neben den Acrylsäureestern gegebenenfalls zur Herstellung der Pfropfgrundlage B.2 dienen können, sind z. B. Acrylnitril, Styrol, α-Methylstyrol, Acrylamide, Vinyl-$C_1$-$C_6$-alkylether, Methylmethacrylat, Butadien. Bevorzugte Acrylatkautschuke als Pfropfgrundlage B.2 sind Emulsionspolymerisate, die einen Gelgehalt von mindestens 60 Gew.-% aufweisen.

Weitere geeignete Pfropfgrundlagen gemäß B.2 sind Silikonkautschuke mit pfropfaktiven Stellen, wie sie in den DE-A 3 704 657, DE-A 3 704 655, DE-A 3 631 540 und DE-A 3 631 539 beschrieben werden.

Der Gelgehalt der Pfropfgrundlage B.2 wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Die mittlere Teilchengröße $d_{50}$ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

**Komponente C**

Die Komponente C umfasst ein oder mehrere thermoplastische Vinyl (co)polymerisate C.1 und/oder Polyalkylenterephthalate C.2.

Geeignet sind als Vinyl(co)Polymerisate C.1 Polymerisate von mindestens einem Monomeren aus der Gruppe der Vinylaromaten, Vinylcyanide (ungesättigte Nitrile), (Meth)Acrylsäure-($C_1$-$C_8$)-Alkylester, ungesättigte Carbonsäuren sowie Derivate (wie Anhydride und Imide) ungesättigter Carbonsäuren. Insbesondere geeignet sind (Co)Polymerisate aus

C.1.1 50 bis 99, vorzugsweise 60 bis 80 Gew.-Teilen Vinylaromaten und/oder kernsubstituierten Vinylaromaten wie beispielsweise Styrol, α-Methylstyrol, p-Methylstyrol, p-Chlorstyrol) und/oder Methacrylsäure-($C_1$-$C_8$)-Alkylester wie z.B. Methylmethacrylat, Ethylmethacrylat), und

C.1.2 1 bis 50, vorzugsweise 20 bis 40 Gew.-Teilen Vinylcyanide (ungesättigte Nitrile) wie Acrylnitril und Methacrylnitril und/oder (Meth)Acrylsäure-($C_1$-$C_8$)-Alkylester (wie z.B. Methylmethacrylat, n-Butylacrylat, t-Butylacrylat) und/oder ungesättigte Carbonsäuren (wie Maleinsäure) und/oder Derivate (wie Anhydride und Imide) ungesättigter Carbonsäuren (beispielsweise Maleinsäureanhydrid und N-Phenyl-Maleinimid).

Die (Co)Polymerisate C.1 sind harzartig, thermoplastisch und kautschukfrei.

Besonders bevorzugt ist das Copolymerisat aus C.1.1 Styrol und C.1.2 Acrylnitril.

Die (Co)Polymerisate gemäß C.1 sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise Molekulargewichte $\overline{M}_w$ (Gewichtsmittel, ermittelt durch Lichtstreuung oder Sedimentation) zwischen 15 000 und 200 000.

Die Polyalkylenterephthalate der Komponente C.2 sind Reaktionsprodukte aus aromatischen Dicarbonsäuren oder ihren reaktionsfähigen Derivaten, wie Dimethylestern oder Anhydriden, und aliphatischen, cycloaliphatischen oder araliphatischen Diolen sowie Mischungen dieser Reaktionsprodukte.

Bevorzugte Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 mol-%, bezogen auf die Diolkomponente Ethylenglykol- und/oder Butandiol-1,4-Reste.

Die bevorzugten Polyalkylenterephthalate können neben Terephthalsäureresten bis zu 20 mol-%, vorzugsweise bis zu 10 mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexan-diessigsäure.

Die bevorzugten Polyalkylenterephthalate können neben Ethylenglykol- bzw. Butandiol-1,4-Resten bis zu 20 mol-%, vorzugsweise bis zu 10 mol-%, andere aliphatische Diole mit 3 bis 12 C-Atomen oder cycloalipahtische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-β-hydroxyethoxyphenyl)-propan und 2,2-Bis-(4-hydroxypropoxyphenyl)-propan (DE-OS 2 407 674, 2 407 776, 2 715 932).

Die Polyalkylenterephthalate können durch Einbau relativ kleiner Mengen 3- oder 4-wertiger Alkohole oder 3- oder 4-basischer Carbonsäuren, z.B. gemäß DE-A 1 900 270 und US-A 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Mischungen von Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Die vorzugsweise verwendeten Polyalkylenterephthalate besitzen im allgemeinen eine Grenzviskosität von 0,4 bis 1,5 dl/g, vorzugsweise 0,5 bis 1,2 dl/g, gemessen in Phenol/o-Dichlorbenzol (1:1 Gewichtsteile) bei 25°C im Ubbelohde-Viskosimeter.

Die Polyalkylenterephthalate lassen sich nach bekannten Methoden herstellen (s. z.B. Kunststoff-Handbuch, Band VIII, S. 695 ff., Carl-Hanser-Verlag, München 1973).

**Komponente D**

In Komponente D ist D.1) vorzugsweise in Mengen von 50 bis 98 Gew.-% besonders bevorzugt 70 bis 98 Gew.-%, insbesondere 75 bis 95 Gew.-% und D.2) vorzugsweise in Mengen von 50 bis 2 Gew.-%, besonders bevorzugt 30 bis 2, insbesondere 25 bis 5 Gew.-% (jeweils bezogen auf D) enthalten.

Phosphorhaltige Flammschutzmittel gemäß Komponente D.1 sind bevorzugt ausgewählt aus den Gruppen der Mono- und oligomeren Phosphor- und Phosphonsäureester, Phosphonatamine und Phosphazene, wobei auch Mischungen von mehreren Komponenten ausgewählt aus einer oder verschiedenen dieser Gruppen als Flammschutzmittel zum Einsatz kommen können. Auch andere hier nicht speziell erwähnte halogenfreie Phosphorverbindungen können alleine oder in beliebiger Kombination mit anderen halogenfreien Phosphorverbindungen eingesetzt werden.

Bevorzugte Mono- und oligomere Phosphor- bzw. Phosphonsäureester sind Phosphorverbindungen der allgemeinen Formel (III)

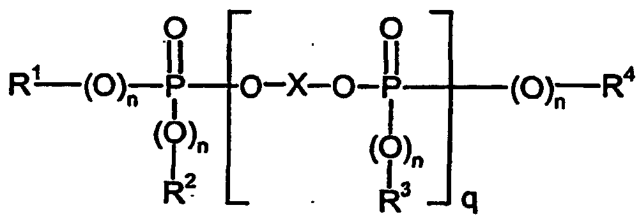

(III)

worin

| | |
|---|---|
| $R^1$, $R^2$, $R^3$ und $R^4$, | unabhängig voneinander jeweils gegebenenfalls halogeniertes $C_1$- bis $C_8$-Alkyl, jeweils gegebenenfalls durch Alkyl, vorzugsweise $C_1$-$C_4$-Alkyl, und/oder Halogen, vorzugsweise Chlor, Brom, substituiertes $C_5$- bis $C_6$-Cycloalkyl, $C_6$- bis $C_{20}$-Aryl oder $C_7$- bis $C_{12}$-Aralkyl, |
| n | unabhängig voneinander, 0 oder 1 |
| q | 0 bis 30 und |
| X | einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann, bedeuten. |

Bevorzugt stehen $R^1$, $R^2$, $R^3$ und $R^4$ unabhängig voneinander für $C_1$-$C_4$-Alkyl, Phenyl, Naphthyl oder Phenyl-$C_1$-$C_4$-alkyl. Die aromatischen Gruppen $R^1$, $R^2$, $R^3$ und $R^4$ können ihrerseits mit Halogen- und/oder Alkylgruppen, vorzugsweise Chlor, Brom und/oder $C_1$-$C_4$-Alkyl substituiert sein. Besonders bevorzugte Aryl-Reste sind Kresyl, Phenyl, Xylenyl, Propylphenyl oder Butylphenyl sowie die entsprechenden bromierten und chlorierten Derivate davon.

X in der Formel (III) bedeutet bevorzugt einen ein- oder mehrkernigen aromatischen Rest mit 6 bis 30 C-Atomen. Dieser leitet sich bevorzugt von Diphenolen der Formel (I) ab.

n in der Formel (III) kann, unabhängig voneinander, 0 oder 1 sein, vorzugsweise ist n gleich 1.

q steht für Werte von 0 bis 30. Bei Einsatz von Mischungen verschiedener Komponenten der Formel (III) können Mischungen vorzugsweise zahlengemittelte q-Werte von 0,3 bis 20, besonders bevorzugt 0,5 bis 10, insbesondere 0,5 bis 6 verwendet werden.

X steht besonders bevorzugt für

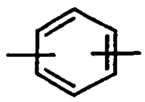 , 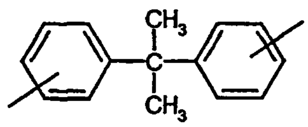 , 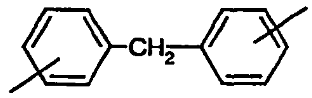 ,

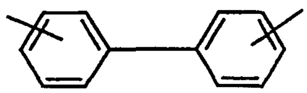

oder deren chlorierte oder bromierte Derivate, insbesondere leitet sich X von Resorcin, Hydrochinon, Bisphenol A oder Diphenylphenol ab. Besonders bevorzugt leitet sich X von Bisphenol A ab.

Der Einsatz von oligomeren Phosphorsäureestern der Formel (III), die sich vom Bisphenol A ableiten, ist besonders vorteilhaft, da die mit dieser Phosphorverbindung ausgerüsteten Zusammensetzungen eine besonders hohe Spannungsriss- und Hydrolysebeständigkeit sowie eine besonders geringe Neigung zur Belagsbildung bei der Spritzgussverarbeitung aufweisen. Desweiteren lässt sich mit diesen Flammschutzmitteln eine besonders hohe Wärmeformbeständigkeit erzielen.

Als erfindungsgemäße Komponente D.1 können Monophosphate (q=O), Oligophosphate (q=1-30) oder Mischungen aus Mono- und Oligophosphaten eingesetzt werden.

Monophosphorverbindungen der Formel (III) sind insbesondere Tributylphosphat, Tris-(2-chlorethyl)-phosphat, Tris-(2,3-dibromprobyl)-phosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, halogensubstituierte Arylphosphate, Methylphosphonsäuredimethylester, Methylphosphensäurediphenylester, Phenylphosphonsäurediethylester, Triphenylphosphinoxid oder Trikresylphosphinoxid.

Die Phosphorverbindungen gemäß Komponente D.1 Formel (III) sind bekannt (vgl. z.B. EP-A 363 608, EP-A 640 655) oder lassen sich nach bekannten Methoden in analoger Weise herstellen (z.B. Ullmanns Encyklopädie der technischen Chemie, Bd. 18, S. 301 ff. 1979; Houben-Weyl, Methoden der organischen Chemie, Bd. 12/1, S. 43; Beilstein Bd. 6, S. 177).

Die mittleren q-Werte können bestimmt werden, indem mittels geeigneter Methode (Gaschromatographie (GC), High Pressure Liquid Chromatography (HPLC), Gelpermeationschromatographie (GPC)) die Zusammensetzung der Phosphat-Mischung (Molekulargewichtsverteilung) bestimmt wird und daraus die Mittelwerte für q berechnet werden.

Phosphonatamine sind vorzugsweise Verbindungen der Formel (IV)

$$A_{3-y}\text{-}NB^{1}_{y} \qquad \text{(IV)}$$

in welcher
A für einen Rest der Formel (Va)

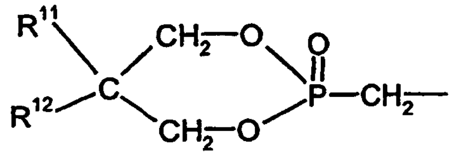 (Va)

oder (Vb)

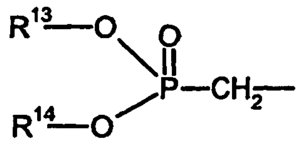

(Vb)

steht,

$R^{11}$ und $R^{12}$ unabhängig voneinander für unsubstituiertes oder substituiertes $C_1$-$C_{10}$-Alkyl oder für unsubstituiertes oder substituiertes $C_6$-$C_{10}$-Aryl, stehen,

$R^{13}$ und $R^{14}$ unabhängig voneinander für unsubstituiertes oder substituiertes $C_1$-$C_{10}$-Alkyl oder unsubstituiertes oder substituiertes $C_6$-$C_{10}$-Aryl stehen oder

$R^{13}$ und $R^{14}$ zusammen für unsubstituiertes oder substituiertes $C_3$-$C_{10}$-Alkylen stehen,

y die Zahlenwerte 0, 1 oder 2 bedeuten und

$B^1$ unabhängig für Wasserstoff, gegebenenfalls halogeniertes $C_2$-$C_8$-Alkyl, unsubstituiertes oder substituiertes $C_6$-$C_{10}$-Aryl steht.

$B^1$ steht vorzugsweise unabhängig für Wasserstoff, für Ethyl, n- oder iso-Propyl, welche durch Halogen substituiert sein können, unsubstituiertes oder durch $C_1$-$C_4$-Alkyl und/oder Halogen substituiertes $C_6$-$C_{10}$-Aryl, insbesondere Phenyl oder Naphthyl.

Alkyl in $R^{11}$, $R^{12}$, $R^{13}$ und $R^{14}$ steht unabhängig vorzugsweise für Methyl, Ethyl, n-Propyl, iso-Propyl, n-, iso-, sec. oder tert. Butyl, Pentyl oder Hexyl.

Substituiertes Alkyl in $R^{11}$, $R^{12}$, $R^{13}$ und $R^{14}$ steht unabhängig vorzugsweise für durch Halogen substituiertes $C_1$-$C_{10}$-Alkyl, insbesondere für ein- oder zweifach substituiertes Methyl, Ethyl, n-Propyl, iso-Propyl, n-, iso-, sec. oder tert.-Butyl, Pentyl oder Hexyl.

$C_6$-$C_{10}$-Aryl steht in $R^{11}$, $R^{12}$, $R^{13}$ und $R^{14}$ unabhängig vorzugsweise für Phenyl, Naphthyl oder Binaphthyl, insbesondere o-Phenyl, o-Naphthyl, o-Binaphthyl, welche durch Halogen (im allgemeinen ein-, zwei- oder dreifach) substituiert sein können.

$R^{13}$ und $R^{14}$ können zusammen mit den Sauerstoffatomen, an die sie direkt gebunden sind, und dem Phosphoratom eine Ringstruktur bilden.

Beispielhaft und vorzugsweise werden genannt: 5,5,5',5',5",5"-Hexamethyltris-(1,3,2-dioxaphosphorinan-methan)amino-2,2',2"-trioxid der Formel (Va-1)

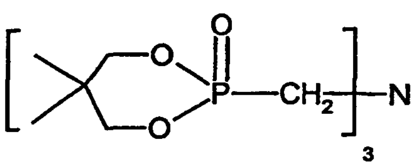

(Va-1)

(Versuchsprodukt XPM 1000 Fa. Solutia Inc., St. Louis, USA)
1,3,2-Dioxaphosphorinan-2-methanamin, N-butyl-N[(5,5-dimethyl-1,3,2-dioxaphosphorinan-2-yl)methyl]-5,5-dimethyl-, P,2-dioxide; 1,3,2-Dioxaphosphorinane-2-methanamin, N-[[5,,5-dimethyl-1,3,2-dioxaphosphorinan-2-yl)methyl]-5,5-dimethyl-N-phenyl-, P,2-dioxid; 1,3,2-Dioxaphosphorinan-2-methanamin, N,N-dibutyl-5,5-dimethyl-, 2-oxid, 1,3,2-Dioxaphosphorinan-2-methanimin, N-[(5,5-dimethyl-1,3,2-dioxaphosphorinan-2-yl)methyl]-N-ethyl-5,5-dimethyl-, P,2-dioxid, 1,3,2-Dioxaphosphorinan-2-methanamin, N-butyl-N-[(5,5-dichloromethyl-1,3,2-dioxaphosphorinan-2-yl)-methyl]-5,5-di-chloromethyl-, P,2-dioxid, 1,3,2-Dioxaphosphorinan-2-methanamin, N-[(5,5-di-chloromethyl-1,3,2-dioxoaphosphorinan-2-yl)methyl]-5,5-dichloromethyl-N-phenyl-, P,2-dioxid; 1,3,2-Dioxaphosphorinan-2-methanamin, N,N-di-(4-chlorobutyl)-5,5-dimethyl-2-oxide; 1,3,2-Dioxaphosphorinan-2-methanimin, N-[(5,5-dimethyl-1,3,2-dioxaphosphorinan-2-yl)methan]-N-(2-chloroethyl)-5,5-di(chloromethyl)-, P2-dioxid.

Bevorzugt sind weiterhin:

Verbindungen der Formel (Va-2) oder (Va-3)

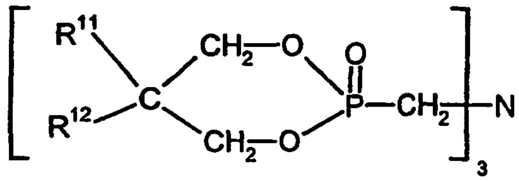

(Va-2)

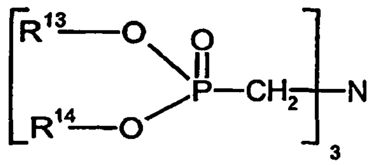

(Va-3)

wobei
$R^{11}$, $R^{12}$, $R^{13}$ und $R^{14}$ die oben angegebenen Bedeutungen haben.

Besonders bevorzugt sind Verbindungen der Formel (Va-2) und (Va-1).

Die Herstellung der Phosphonatamine ist beispielsweise in US-Patentschrift 5,844,028 beschrieben.

Phosphazene sind Verbindungen der Formeln (VIa) und (VIb)

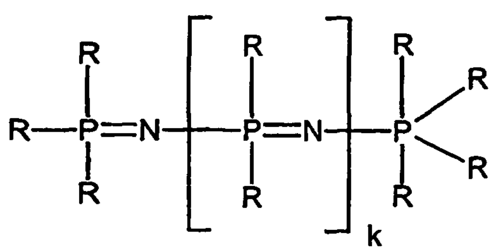

(VIa),

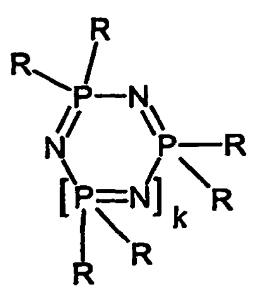

(VIb),

worin

R jeweils gleich oder verschieden ist und für Amino, jeweils gegebenenfalls halogeniertes, vorzugsweise mit Fluor halogeniertes $C_1$- bis $C_8$-Alkyl, oder $C_1$- bis $C_8$- Alkoxy, jeweils gegebenenfalls durch Alkyl, vorzugsweise $C_1$-$C_4$-Alkyl, und/oder Halogen, vorzugsweise Chlor und/oder Brom, substituiertes $C_5$- bis $C_6$-Cycloalkyl, $C_6$- bis $C_{20}$-Aryl, vorzugsweise Phenyl oder Naphthyl, $C_6$- bis $C_{20}$-Aryloxy, vorzugsweise Phenoxy, Naphthyloxy, oder $C_7$- bis $C_{12}$-Aralkyl, vorzugsweise Phenyl-$C_1$-$C_4$-alkyl, steht,

k für 0 oder eine Zahl von 1 bis 15, vorzugsweise für eine Zahl von 1 bis 10 steht.

Beispielhaft seien genannt:

Propoxyphosphazen, Phenoxyphosphazen, Methylphenoxyphosphazen, Aminophosphazen und Fluoralkylphosphazene.

Bevorzugt ist Phenoxyphosphazen.

Die Phosphazene können allein oder als Mischung eingesetzt werden. Der Rest R kann immer gleich sein oder 2 oder mehr Reste in den Formeln (Ia) und (Ib) können verschieden sein.

Phosphazene und deren Herstellung sind beispielsweise in EP-A 728 811, DE-A 1 961668 und WO 97/40092 beschrieben.

Die Flammschutzmittel können allein oder in beliebiger Mischung untereinander oder in Mischung mit anderen Flammschutzmitteln eingesetzt werden.

Phosphor-Sauerstoff-Verbindungen und Phosphor-Schwefel-Verbindungen gemäß Komponente D.2 sind Phosphoroxide und Phosphorsulfide. Besonders bevorzugt ist $P_2O_5$.

Die phosphorhaltigen Flammschutzmittel gemäß Komponente D.1 und die Phosphorverbindungen gemäß Komponente D.2 können bei der Herstellung der Polymermischung separat oder gemischt als spezielle Zubereitung zugegeben werden. Die Mischung der Komponente D.1. und D.2 kann bei Raumtemperatur oder erhöhter Temperatur erfolgen. Vorzugsweise wird diese Mischung bei Temperaturen oberhalb 100°C, besonders bevorzugt oberhalb 200°C hergestellt. Im erfindungsgemäßen Sinn sind also auch die bei höheren Temperaturen aus Komponente D.1 und Komponente D.2 erhaltenen Produkte zu verstehen.

## Komponente E

Die fluorierten Polyolefine E sind hochmolekular und besitzen Glasübergangstemperaturen von über -30°C, in der Regel von über 100°C, Fluorgehalte, vorzugsweise von 65 bis 76, insbesondere von 70 bis 76 Gew.-%, mittlere Teilchendurchmesser $d_{50}$ von 0,05 bis 1 000, vorzugsweise 0,08 bis 20 μm. Im allgemeinen haben die fluorierten Polyolefine F eine Dichte von 1,2 bis 2,3 $g/cm^3$. Bevorzugte fluorierte Polyolefine F sind Polytetrafluorethylen, Polyvinylidenfluorid, Tetrafluorethylen/Hexafluorpropylen- und Ethylen/Tetrafluorethylen-Copolymerisate. Die fluorierten Polyolefine sind bekannt (vgl. "Vinyl and Related Polymers" von Schildknecht, John Wiley & Sons, Inc., New York, 1962, Seite 484-494; "Fluorpolymers" von Wall, Wiley-Interscience, John Wiley & Sons, Inc., New York, Band 13, 1970, Seite 623-654; "Modern Plastics Encyclopedia", 1970-1971, Band 47, Nr. 10 A, Oktober 1970, Mc Graw-Hill, Inc., New York, Seite 134 und 774; "Modern Plastica Encyclopedia", 1975-1976, Oktober 1975, Band 52, Nr. 10 A, Mc Graw-Hill, Inc., New York, Seite 27, 28 und 472 und US-PS 3 671 487, 3 723 373 und 3 838 092).

Sie können nach bekannten Verfahren hergestellt werden, so beispielsweise durch Polymerisation von Tetrafluorethylen in wässrigem Medium mit einem freie Radikale bildenden Katalysator, beispielsweise Natrium-, Kalium- oder Ammoniumperoxidisulfat bei Drucken von 7 bis 71 $kg/cm^2$ und bei Temperaturen von 0 bis 200°C, vorzugsweise bei Temperaturen von 20 bis 100°C. (Nähere Einzelheiten s. z. B. US-A 2 393 967). Je nach Einsatzform kann die Dichte dieser Materialien zwischen 1,2 und 2,3 $g/cm^3$, die mittlere Teilchengröße zwischen 0,5 und 1 000 μm liegen.

Erfindungsgemäß bevorzugte fluorierte Polyolefine E sind Tetrafluorethylenpolymerisate mit mittleren Teilchendurchmesser von 0,05 bis 20 μm, vorzugsweise 0,08 bis 10 μm, und eine Dichte von 1,2 bis 1,9 $g/cm^3$ und werden vorzugsweise in Form einer koagulierten Mischung von Emulsionen der Tetrafluorethylenpolymerisate F mit Emulsionen der Pfropfpolymerisate B eingesetzt.

Weitere erfindungsgemäß bevorzugte Zubereitungen sind die fluorierten Polyolefine E:

E.1) als koagulierte Mischung mit mindestens einer der Komponenten A bis C, wobei das fluorierte Polyolefin E bzw. Polyolefingemisch als Emulsion mit mindestens einer Emulsion der Komponenten A bis C gemischt und anschließend koaguliert wird.

E.2) als Präcompound mit mindestens einer der Komponenten A bis C, wobei die fluorierten Polyolefine E als Pulver mit einem Pulver oder einem Granulat mindestens einer der Komponenten A bis C vermischt und in der

Schmelze, im allgemeinen bei Temperaturen von 208°C bis 330°C in den üblichen Aggregaten wie Innenkneter, Extruder oder Doppelwellenschnecken, compoundiert wird.

Bevorzugte Zubereitungen für die fluorierten Polyolefine E sind koagulierte Mischungen mit einem Pfropfpolymerisat B oder einem Vinyl(co)polymerisat C.

Geeignete, in Pulverform einsetzbare fluorierte Polyolefine E sind Tetrafluorethylenpolymerisate mit mittleren Teilchendurchmesser von 100 bis 1 000 µm und Dichten von 2,0 g/$cm^3$ bis 2,3 g/$cm^3$.

Zur Herstellung einer koagulierten Mischung aus B und F wird zuerst eine wässrige Emulsion (Latex) eines Pfropfpolymerisates B mit einer feinteiligen Emulsion eines Tetrafluorethylenpolymerisates F vermischt; geeignete Tetrafluorethylenpolymerisat-Emulsionen besitzen üblicherweise Feststoffgehalte von 30 bis 70 Gew-.%, insbesondere von 50 bis 60 Gew.-%, vorzugsweise von 30 bis 35 Gew.-%.

Die Mengenangabe bei der Beschreibung der Komponente B kann den Anteil des Pfropfpolymerisats für die koagulierte Mischung aus Pfropfpolymerisat und fluoriertem Polyolefinen einschließen.

In der Emulsionsmischung liegt das Gewichtsverhältnis Pfropfpolymerisat B zum Tetrafluorethylenpolymerisat F bei 95:5 bis 60:40. Anschließend wird die Emulsionsmischung in bekannter Wiese koaguliert, beispielsweise durch Sprühtrocknen, Gefriertrocknung oder Koagulation mittels Zusatz von anorganischen oder organischen Salzen, Säuren, Basen oder organischen, mit Wasser mischbaren Lösemitteln, wie Alkoholen, Ketonen, vorzugsweise bei Temperaturen von 20 bis 150°C, insbesondere von 50 bis 100°C. Falls erforderlich, kann bei 50 bis 200°C, bevorzugt 70 bis 100°C, getrocknet werden.

Geeignete Tetrafluorethylenpolymerisat-Emulsionen sind handelsübliche Produkte und werden beispielsweise von der Firma DuPont als Teflon® 30 N angeboten.

Die erfindungsgemäßen Formmassen können weingstens eines der üblichen Additive, wie Gleit- und Entformungsmittel, Nukleiermittel, Antistatika, Stabilisatoren sowie Farbstoffe und Pigmente enthalten.

Die erfindungsgemäßen Blends enthaltend die Komponenten A bis E und gegebenenfalls weitere bekannte Zusätze wie Stabilisatoren, Farbstoffen, Pigmenten, Gleit- und Entformungsmitteln, Nukleiermittel sowie Antistatika, werden hergestellt, indem man die jeweiligen Bestandteile in bekannter Weise vermischt und bei Temperaturen von 200°C bis 300°C in üblichen Aggregaten wie Innenknetern, Extrudern und Doppelwellenschnecken schmelzcompoundiert und schmelzextrudiert, wobei die Komponente F vorzugsweise in Form der bereits erwähnten koagulierten Mischung eingesetzt wird.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Gegenstand der Erfindung ist daher auch ein Verfahren zur Herstellung der Formmassen.

Die erfindungsgemäßen Blends eignen sich aufgrund ihrer ausgezeichneten Flammfestigkeit und Spannungsrissverhalten und ihrer guten mechanischen Eigenschaften zur Herstellung von Formkörpern jeglicher Art, insbesondere solchen mit erhöhten Anforderungen an das Spannungsrissverhalten wie etwa bei Kontakt mit Ölen, Fetten oder organischen Lösungsmiteln.

Die Blends der vorliegenden Erfindung können zur Herstellung von Formkörpern jeder Art verwendet werden. Insbesondere können Formkörper durch Spritzguss hergestellt werden. Beispiele für herstellbare Formkörper sind: Gehäuseteile jeder Art, z.B. für Haushaltsgeräte wie Saftpressen, Kaffeemaschinen, Mixer, für Büromaschinen, wie Monitore, Drucker, Kopierer oder Abdeckplatten für den Bausektor und Teile für den Kfz-Sektor. Sie sind außerdem auf dem Gebiet der Elektrotechnik einsetzbar, weil sie sehr gute elektrische Eigenschaften haben.

Weiterhin können die erfindungsgemäßen Formmassen beispielsweise zur Herstellung von folgenden Formkörpern bzw. Formteilen verwendet werden:

Innenausbauteile für Schienenfahrzeuge, Radkappen, Gehäuse von Kleintransformatoren enthaltenden Elektrogeräten, Gehäuse für Geräte zur Informationsverbreitung und -Übermittlung, Gehäuse und Verkleidung für medizinische Zwecke, Massagegeräte und Gehäuse dafür, Spielfahrzeuge für Kinder, flächige Wandelemente, Gehäuse für Sicherheitseinrichtungen, Heckspoiler, wärmeisolierte Transportbehältnisse, Vorrichtung zur Haltung oder Versorgung von Kleintieren, Formteile für Sanitär- und Badeausrüstungen, Abdeckgitter für Lüfteröffnungen, Formteile für Garten- und Gerätehäuser, Gehäuse für Gartengeräte.

Weitere Anwendungen sind möglich
als Dateitechnikgeräte: Telekommunikationsgeräte wie Telefongeräte und Telefaxe, Computer, Drucker, Scanner, Plotter, Monitor, Tastatur, Schreibmaschine, Diktiergeräte, usw.,
als Elektrogeräte: Netzteile, Ladegeräte, Kleintransformatoren für Computer und Unterhaltungselektronik, Niederspannungstransformatoren, usw.,
als Gartengeräte: Gartenmöbel, Rasenmähergehäuse, Rohre und Gehäuse für Gartenbewässerung, Gartenhäuser, Laubsauger, Schredder, Hächsler, Spritzgeräte usw.,
im Möbelbereich: Arbeitsplatten, Möbellaminate, Rolladenelemente, Büromöbel, Tische, Stühle, Sessel, Schränke, Regale, Türelemente, Fensterelemente, Bettkästen usw.,

als Sport-/Spielgeräte: Spielfahrzeuge, Sitzflächen, Pedale, Sportgeräte, Fahrräder, Tischtennisplatte, Heimtrainer, Golf-Caddys, Snow boards, Bootsaussenteile, Campingartikel, Strandkörbe usw.,
im Bausektor innen/außen: Hausverkleidung, Profilleiste, Rohre, Kabel, Rolladenelemente, Briefkästen, Lampengehäuse, Dachziegel, Fliesen, Trennwände, Kabelkanäle, Fußbodenleiste, Steckdosen usw.
im Bereich der Kfz/Schienenfahrzeuge: Wand-, Decken-Verkleidungen, Sitzschalen, Sitze, Bänke, Tische, Gepäckablagen, Radkappen, Heckspoiler, Kotflügel, Heckklappen, Motorhauben, Seitenteile usw.

Eine weitere Form der Verarbeitung ist die Herstellung von Formkörpern durch Tiefziehen aus vorher hergestellten Platten oder Folien.

Ein weiterer Gegenstand der vorliegenden Erfindung ist daher auch die Verwendung der erfindungsgemäßen Formmassen zur Herstellung von Formkörpern jeglicher Art, vorzugsweise der oben genannten, sowie die Formkörper aus den erfindungsgemäßen Formmassen.

## Beispiele

### Komponente A

Lineares Polycarbonat auf Basis Bisphenol A mit einer relativen Lösungsviskosität von 1,252, gemessen in $CH_2Cl_2$ als Lösungsmittel bei 25°C und einer Konzentration von 0,5 g/100 ml.

### Komponente B

Pfropfpolymerisat von 40 Gew.-Teilen eines Copolymerisats aus Styrol und Acrylnitril im Verhältnis von 72: 28 auf 60 Gew.-Teile teilchenförmigen vernetzten Polybutadienkautschuk (mittlerer Teilchendurchmesser $d_{50}$ = 0,40 µm), hergestellt durch Emulsionspolymerisation.

### Komponente C

Styrol/Acrylnitril-Copolymerisat mit einem Styrol/Acrylnitril-Gewichtsverhältnis von 72:28 und einer Grenzviskosität von 0,55 dl/g (Messung in Dimethylformamid bei 20°C).

### Komponente D

D.1.1 Triphenylphosphat, Disflamoll TP® der Firma Bayer AG, Leverkusen, Deutschland

D.1.2 m-Phenylen-bis(di-phenylphosphat), Fyrolflex® der Firma AKZO, Nobel Chemicals GmbH, 52349 Düren, Germany

D.2 handelsübliches $P_2O_5$, Fa. Riedel-de Haen, Deutschland

Da) Mischung aus D1.1 und D.2
Herstellung:
Das Triphenylphosphat wird unter Stickstoff bei 60°C aufgeschmolzen. Anschließend wird das Phosphorpentoxid zugegeben. Die Mischung wird 10 min kräftig gerührt, auf 270°C aufgeheizt und bei dieser Temperatur 120 Minuten gehalten. Nach der Reaktion wird das Produkt abgekühlt, wobei nadelförmige Kristalle entstehen.
Das Verhältnis Triphenylphosphat : $P_2O_5$ in Da) beträgt 90:10.

Db) Herstellung wie Da) jedoch nur 30 Min. bei 270°C
Das Verhältnis Triphenylphosphat: $P_2O_5$ in Db) beträgt 75:25. Db) ist eine viskose Flüssigkeit.

### Komponente E

Tetrafluorethylenpolymerisat als koagulierte Mischung aus einer SAN-Pfropfpolymerisat-Emulsion gemäß Komponente B in Wasser und einer Tetrafluorethylenpolymerisat-Emulsion in Wasser. Das Gewichtsverhältnis Pfropfpolymerisat B zum Tetrafluorethylenpolymerisat E in der Mischung ist 90 Gew.-% zu 10 Gew.-%. Die Tetrafluorethylenpolyermisat-Emulsion besitzt einen Feststoffgehalt von 60 Gew.-%, der mittlere Teilchendurchmesser liegt zwischen 0,05 und 0,5 µm. Die Pfropfpolymerisat-Emulsion besitzt einen Feststoffgehalt von 34 Gew.-% und einen mittleren

Latexteilchendurchmesser von 0,4 µm.

**Herstellung von E**

Die Emulsion des Tetraßuorethylenpolymerisats (Teflon 30 N der Fa. DuPont) wird mit der Emulsion des Pfropfpolymerisats B vermischt und mit 1,8 Gew.-%, bezogen auf Polymerfeststoff, phenolischer Antioxidantien stabilisiert. Bei 85 bis 95°C wird die Mischung mit einer wässrigen Lösung von $MgSO_4$ (Bittersalz) und Essigsäure bei pH 4 bis 5 koaguliert, filtriert und bis zur praktischen Elektrolytfreiheit gewaschen, anschließend durch Zentrifugation von der Hauptmenge Wasser befreit und danach bei 100°C zu einem Pulver getrocknet. Dieses Pulver kann dann mit den weiteren Komponenten in den beschriebenen Aggregaten compoundiert werden.

**Herstellung und Prüfung der erfindungsgemäßen Formmassen**

Das Mischen der Komponenten erfolgt auf einem 3-1-Innenkneter. Die Formkörper werden auf einer Spritzgießmaschine Typ Arburg 270 E bei 260°C hergestellt.
Die Bestimmung der Wärmeformbeständigkeit nach Vicat B erfolgt gemäß DIN 53 460 (ISO 306) an Stäben der Abmessung 80 x 10 x 4 mm.
Das Spannungsrissverhalten (ESC-Verhalten) wird an Stäben der Abmessung 80 x 10 x 4 mm, (hergestellt bei 260°C Verarbeitungstemperatur), untersucht. Als Testmedium wird eine Mischung aus 60 Vol.-% Toluol und 40 Vol.-% Isopropanol verwendet. Die Probekörper werden mittels einer Kreisbogenschablone vorgedehnt (Vordehnung in Prozent) und bei Raumtemperatur im Testmedium gelagert. Das Spannungsrißverhalten wird über die Rißbildung bzw. den Bruch in Abhängigkeit von der Vordehnung ε) und der Expositionszeit im Testmedium beurteilt.
Das Brandverhalten der Proben wurde nach UL-Subj. 94 V an Stäben der Abmessung 127 x 12,7 x 1,6 mm gemessen, hergestellt auf einer Spritzgußmaschine bei 260°C.
Die UL 94 V-O-Klassifizierung umfaßt die nachstehend beschriebenen Eigenschaften von Materialien, die gemäß der UL 94 V-Vorschrift geprüft werden.
Die Formmassen in dieser Klasse enthalten keine Proben, die länger als 10 s nach jeder Einwirkung der Restflamme brennen; sie zeigen keine Gesamtflammzeit von mehr als 50 s bei der zweimaligen Flammeinwirkung auf jeden Probesatz; sie enthalten keine Proben, die vollständig bis hinauf zu der am oberen Ende der Probe befestigten Halteklammer abbrennen; sie weisen keine Proben auf, die die unterhalb der Probe angeordnete Watte durch brennende Tropfen oder Teilchen entzünden; sie enthalten auch keine Proben, die länger als 30 s nach Entfernen der Testflamme glimmen.
Andere UL 94-Klassifizierungen bezeichnen Proben, die weniger flammwidrig oder weniger selbstverlöschend sind, weil sie flammende Tropfen oder Teilchen abgeben. Diese Klassifizierungen werden mit UL 94 V-1 und V-2 bezeichnet. N.B. heißt "nicht bestanden" und ist die Klassifizierung von Proben, die eine Nachbrennzeit von ≥ 30 s aufweisen.

Tabelle:

| **Formmassen und ihre Eigenschaften** | | | | | | | | |
|---|---|---|---|---|---|---|---|---|
| Komponenten [Gew.-Teile] | **1 (Vergleich)** | **2** | **3** | **4** | **5** | **6 (Vergleich)** | **7** | **8** |
| A | 68,4 | 68,4 | 68,4 | 68,4 | 68,4 | 83,0 | 83,0 | 83,0 |
| B | 6,8 | 6,8 | 6,8 | 6,8 | 6,8 | 4,0 | 4,0 | 4,0 |
| C | 9,3 | 9,3 | 9,3 | 9,3 | 9,3 | 1,1 | 2,2 | 2,2 |
| D1.1 | 8,1 | 8,1 | 8,1 | 8,1 | 8,1 | - | - | - |
| D1.2 | 2,7 | 2,7 | 2,7 | 2,7 | 2,7 | 6,6 | - | - |
| D2 | - | 0,25 | 0,5 | 0,75 | 1,0 | - | | |
| Da | | | | | | | 6,6 | |
| Db | | | | | | | | 6,6 |
| E | 4,2 | 4,2 | 4,2 | 4,2 | 4,2 | 3,6 | 3,6 | 3,6 |

Tabelle: (fortgesetzt)

| Formmassen und ihre Eigenschaften | | | | | | | | |
|---|---|---|---|---|---|---|---|---|
| | **1 (Vergleich)** | **2** | **3** | **4** | **5** | **6 (Vergleich)** | **7** | **8** |
| Komponenten [Gew.-Teile] | | | | | | | | |
| Entformungsmittel | 0,4 | 0,4 | 0,4 | 0,4 | 0,4 | 0,4 | 0,4 | 0,4 |
| Eigenschaften | | | | | | | | |
| Vicat B120 (°C) | 97 | 97 | 97 | 97 | 97 | 108 | 109 | 116 |
| Gesantnachbrennzeit UL 94 V 1,6 mm (sec) | 32 | 25 | 22 | 19 | 11 | 65 | 36 | 60 |
| ESC-Verhalten | | | | | | | | |
| Bruch $\varepsilon_x$ (%) Zeit (min) | 2,0 % 2:24 | 2,0 % 3:37 | 2,0 % 5:00 | 2,0 % 5:00 | 2,4% 5:00 | 0,8 % 5:00 | 1,0 % 5:00 | 1,4 % 5:00 |

In Versuchsreihe 1 bis 5 wird deutlich, dass bei Verwendung von $P_2O_5$ Formmasen erhalten werden, die wesentlich kürzere Nachbrennzeiten und deutlich besseres Spannungsrissverhalten (Bruch bei größerer Vordehnung bzw. längeren Expositionszeiten) aufweisen. In den Versuchen 7 und 8 wurde aus $P_2O_5$ und Triphenylphosphat bei erhöhten Temperaturen eine spezielle Zubereitung hergestellt, die sich als sehr wirksames Flammschutzmittel erweist. Die Formmasse aus Versuch 7 besitzt einen um 10 % reduzierten Triphenylphosphatgehalt und hat trotzdem eine von 65 auf 36 Sekunden verkürzte Nachbrennzeit bei Vorteilen in der Wärmeformbeständigkeit und dem Spannungsrissverhalten.

## Patentansprüche

**1.** Zusammensetzungen enthaltend

A) aromatisches Polycarbonat und/oder Polyestercarbonat

B) Schlagzähmodifikator

C) gegebenenfalls thermoplastisches Homo- und/oder Copolymer

D) eine Kombination von

D.1 Phosphorverbindung und

D.2 Phosphor-oxid verschieden von D.1 oder Phosphor-sulfid verschieden von D.1 oder das Reaktionsprodukt von D.1 und D.2.

**2.** Zusammensetzung gemäß Anspruch 1 enthaltend Komponente D in einer Menge von 0,1 bis 30 Gew.-Teilen.

**3.** Zusammensetzung gemäß Anspruch 1 oder 2, wobei D.1 ausgewählt ist aus den Gruppen der Mono- und oligomeren Phosphor- und Phosphorsäureester, Phosphonataminen und Phosphazenen und/oder Mischungen hieraus.

**4.** Zusammensetzung gemäß Anspruch 1 bis 3, enthaltend als Komponente D.1 Phosphorverbindungen der allgemeinen Formel (III)

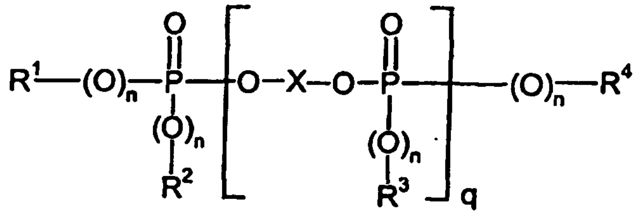 (III)

worin

R[1], R[2], R[3] und R[4], unabhängig voneinander jeweils gegebenenfalls halogeniertes $C_1$- bis $C_8$-Alkyl, jeweils gegebenenfalls durch Alkyl, und/oder Halogen substituiertes $C_5$- bis $C_6$-Cycloalkyl, $C_6$- bis $C_{20}$-Aryl oder $C_7$- bis $C_{12}$-Aralkyl,

n unabhängig voneinander, 0 oder 1

q 0 bis 30 und

X einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann, bedeuten.

**5.** Zusammensetzung gemäß Anspruch 4 wobei X in Formel (III) für

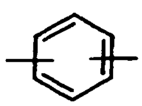 , 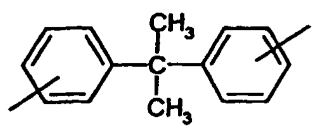 , 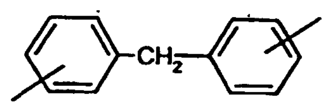 ,

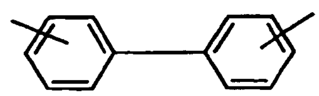

oder deren chlorierte oder bromierte Derivate steht.

**6.** Zusammensetzung gemäß Anspruch 4 oder 5 enthaltend als Komponente D.1 Monophosphate, Oligophosphate oder Mischungen aus Mono- und Oligophosphaten.

**7.** Zusammensetzung gemäß Anspruch 1, enthaltend als Komponente D.1 wenigstens eins ausgewählt aus der Gruppe der Phosphonatamine der Formel (IV)

$$A_{3-y}\text{-}NB^1{}_y \qquad \text{(IV)}$$

in welcher
A für einen Rest der Formel (Va)

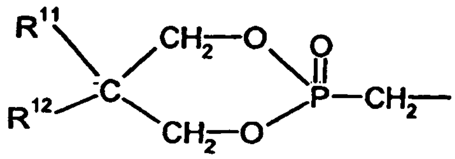

(Va)

oder (Vb)

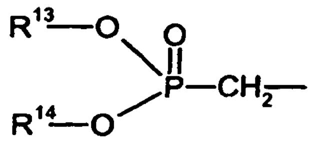

(Vb)

steht,

$R^{11}$ und $R^{12}$ unabhängig voneinander für unsubstituiertes oder substituiertes $C_1$-$C_{10}$-Alkyl oder für unsubstituiertes oder substituiertes $C_6$-$C_{10}$-Aryl, stehen,

$R^{13}$ und $R^{14}$ unabhängig voneinander für unsubstituiertes oder substituiertes $C_1$-$C_{10}$-Alkyl oder unsubstituiertes oder substituiertes $C_6$-$C_{10}$-Aryl stehen oder

$R^{13}$ und $R^{14}$ zusammen für unsubstituiertes oder substituiertes $C_3$-$C_{10}$-Alkylen stehen,

y die Zahlenwerte 0, 1 oder 2 bedeuten und

$B^1$ unabhängig für Wasserstoff, gegebenenfalls halogeniertes $C_2$-$C_8$-Alkyl, unsubstituiertes oder substituiertes $C_6$-$C_{10}$-Aryl steht;

der Phosphazene der Formeln (VIa) und (VIb)

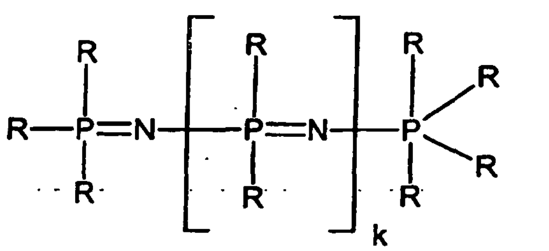

(VIa),

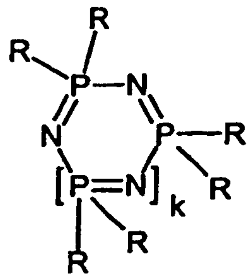

(VIb),

worin

R jeweils gleich oder verschieden ist und für Amino, jeweils gegebenenfalls halogeniertes, $C_1$- bis $C_8$-Alkyl, oder $C_1$- bis $C_8$- Alkoxy, jeweils gegebenenfalls durch Alkyl, $C_4$-Alkyl, und/oder Halogen substituiertes $C_5$- bis $C_6$-Cycloalkyl, $C_6$- bis $C_{20}$-Aryl, $C_6$- bis $C_{20}$-Aryloxy, oder $C_7$- bis $C_{12}$-Aralkyl steht,

k für 0 oder eine Zahl von 1 bis 15 steht.

**8.** Zusammensetzung gemäß Anspruch 1 bis 7 enthaltend Phosphorpentoxid als Komponente D.2.

**9.** Zusammensetzung gemäß der Ansprüche 1 bis 8 enthaltend Anti-dripping Mittel.

**10.** Zusammensetzung gemäß der Ansprüche 1 bis 9 enthaltend als Schlagzähmodifikator Pfropfpolymerisate B) von

B.1 5 bis 95 Gew.-% wenigstens eines Vinylmonomeren auf
B.2 95 bis 5 Gew.-% einer oder mehrerer Pfropfgrundlagen mit Glasübergangstemperaturen <10°C.

**11.** Zusammensetzung gemäß Anspruch 10, wobei Monomere B.1 ausgewählt sind aus

B.1.1 50 bis 99 Gew.-Teilen Vinylaromaten, kernsubstituierten Vinylaromaten oder Methacrylsäure-($C_1$-$C_4$) -Alkylester oder Mischungen hieraus und

B.1.2 1 bis 50 Gew.-Teilen Vinylcyanide, (Meth)Acrylsäure-($C_1$-$C_8$)-Alkylester oder Derivate ungesättigter Carbonsäuren oder Mischungen hieraus.

**12.** Zusammensetzung gemäß Anspruch 11, wobei Monomere B1.1 ausgewählt aus mindestens einem der Monomere Styrol, $\alpha$-Methylstyrol und Methylmethacrylat, und Monomere B.1.2 aus mindestens einem der Monomere Acrylnitril, Maleinsäureanhydrid und Methylmethacrylat.

**13.** Zusammensetzung gemäß Anspruch 12, wobei B.1.1. Styrol und B.1.2 Acrylnitril ist.

**14.** Zusammensetzung gemäß Ansprüche 1 bis 13, wobei die Pfropfgrundlage B.2 ausgewählt ist aus der Gruppe der Dienkautschuke, EP(D)M-Kautschuke, Acrylat-, Polyurethan-, Silikon-, Chloropren- oder Ethylen/Vinylacetat-Kautschuke oder Mischungen hieraus.

**15.** Zusammensetzung gemäß Anspruch 14, wobei die Pfropfgrundlage B.2 ausgewählt ist aus Dienkautschuken, Copolymerisaten von Dienkautschuken mit weiteren copolymerisierbaren Monomeren oder Kautschukmischungen hieraus, mit der Maßgabe, dass die Glasübergangstemperatur der Komponente B.2 unterhalb <10°C liegt.

**16.** Zusammensetzung gemäß der Ansprüche 1 bis 15, wobei Komponente C ausgewählt ist aus einem oder mehreren thermoplastischen Vinyl (co)polymerisaten C.1, Polyalkylenterephthalaten C.2 oder Mischungen hieraus.

**17.** Zusammensetzung gemäß der Ansprüche 1 bis 16, wobei das Antidripping-Mittel fluoriertes Polyolefin ist.

**18.** Zusammensetzung gemäß der Ansprüche 1 bis 17 enthaltend

A) 40 bis 99 Gew.-Teile aromatisches Polycarbonat und/oder Polyestercarbonat

B) 0,5 bis 60 Gew.-Teile Pfropfpolymerisat von

B.1) 5 bis 95, vorzugsweise 30 bis 80 Gew.-% eines oder mehrerer Vinylmonomeren auf

B.2) 95 bis 5, vorzugsweise 20 bis 70 Gew.-% einer oder mehrerer Pfropfgrundlagen mit einer Glasumwandlungstemperatur <10°C, vorzugsweise <0°C, besonders bevorzugt < -20°C,

C) 0 bis 45, vorzugsweise 0 bis 30, besonders bevorzugt 2 bis 25 Gew.-Teile mindestens eines thermoplastischen Polymers, ausgewählt aus der Gruppe der Vinyl(co)polymerisate und Polyalkylenterephthalate,

D) 0,1 bis 30 Gew.-Teile, vorzugsweise 1 bis 25 Gew.-Teile, besonders bevorzugt 2 bis 20 Gew.-Teile einer Kombination aus

D.1) organischer Phosphorverbindung und

D.2) Phosphor-oxid oder Phosphor-sulfid sowie

E) 0 bis 5, vorzugsweise 0,1 bis 3, besonders bevorzugt 0,1 bis 1 Gew.-Teile, insbesondere 0,1 bis 0,5 Gew. -Teile Antidripping Mittel,

wobei die Summe der Gew.-Teile der Komponenten A-E 100 ergibt.

**19.** Verwendung der Zusammensetzungen gemäß Anspruch 1 bis 18 zur Herstellung von Formteilen, Folien oder Platten.

**20.** Formkörper, Folien oder Platten, erhältlich aus Zusammensetzungen gemäß den Ansprüchen 1 bis 18.

## Claims

**1.** Compositions containing

A) aromatic polycarbonate and/or polyester carbonate,

B) toughening agent,

C) optionally, thermoplastic homopolymer and/or opolymer,

D) a combination of

D.1 phosphorus compound and

D.2 phosphorus oxide different from D.1 or phosphorus sulfide different from D.1 or the reaction product of D.1 and D.2.

**2.** Composition according to Claim 1 containing component D in an amount of 0.1 to 30 parts by weight.

**3.** Composition according to Claim 1 or 2, wherein D.1 is selected from the group of monomeric and oligomeric phosphoric and phosphonic acid esters, phosphonate amines and phosphazenes and/or mixtures thereof.

**4.** Composition according to Claims 1 to 3, containing as component D.1 phosphorus compounds of the general formula (III)

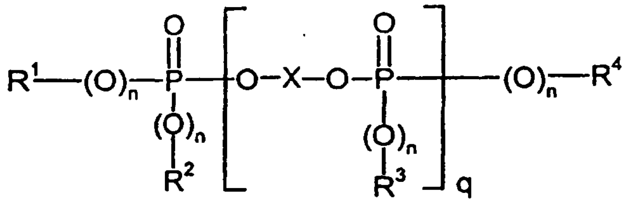

(III)

where

| | |
|---|---|
| $R^1$, $R^2$, $R^3$ and $R^4$ | are, independently of one another, in each case optionally halogenated $C_1$- to $C_8$-alkyl, optionally substituted in each case by alkyl, and/or halogen-substituted $C_5$- to $C_6$-cycloalkyl, $C_6$- to $C_{20}$-aryl or $C_7$- to $C_{12}$-arylkyl, |
| n | is, independently of one another, 0 or 1, |
| q | is 0 to 30 and |
| X | is a mononuclear or polynuclear aromatic radical containing 6 to 30 carbon atoms, or a linear or branched aliphatic radical containing 2 to 30 carbon atoms, which may be OH-substituted and contain up to 8 ether bonds. |

**5.** Composition according to Claim 4, wherein X in formula (III) stands for

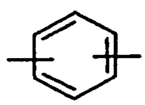
,
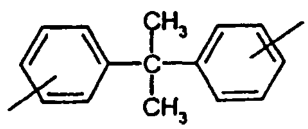
,
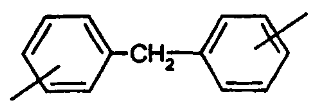

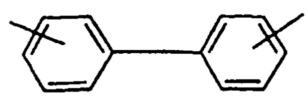

or their chlorinated or brominated derivatives.

**6.** Composition according to Claim 4 or 5 containing, as component D.1, monophosphates, oligophosphates or mixtures of monophosphates and oligophosphates.

**7.** Composition according to Claim 1, containing as component D.1 at least one phosphonate amine selected from the group of phosphonate amines of formula (IV)

$$A_{3-y}\text{-}NB^1_y \qquad (IV)$$

in which
A stands for a radical of formula (Va)

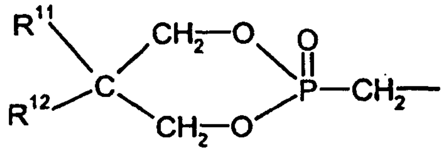

(Va)

or (Vb)

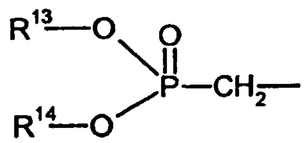

(Vb)

| | |
|---|---|
| $R^{11}$ and $R^{12}$ | stand, independently of one another, for unsubstituted or substituted $C_1$-$C_{10}$-alkyl or for unsubstituted or substituted $C_6$-$C_{10}$-aryl, |
| $R^{13}$ and $R^{14}$ | stand, independently of one another, for unsubstituted or substituted $C_1$-$C_{10}$-alkyl or unsubstituted or substituted $C_6$-$C_{10}$-aryl or |
| $R^{13}$ and $R^{14}$ | together stand for unsubstituted or substituted $C_3$-$C_{10}$-alkylene, |
| y | is the numerical values 0, 1 or 2 and |
| $B^1$ | stands independently for hydrogen, optionally halogenated $C_2$-$C_8$-alkyl, unsubstituted or substituted $C_6$-$C_{10}$-aryl |

phosphazenes of formulae (VIa) and (VIb)

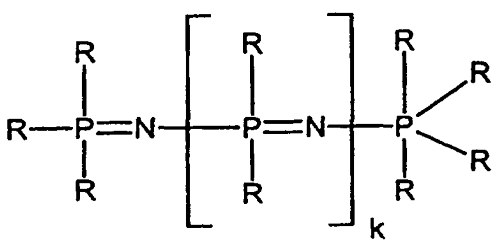

(VIa),

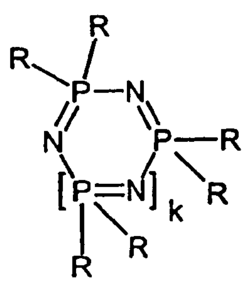

(VIb),

wherein

R is in each case identical or different and stands for amino, in each case optionally halogenated, $C_1$- to $C_8$-alkyl or $C_1$- to $C_8$-alkoxy, in each case optionally substituted by alkyl, $C_4$-alkyl, and/or halogen-substituted $C_5$- to $C_6$-cycloalkyl, $C_6$- to $C_{20}$-aryl, $C_6$- to $C_{20}$-aryloxy, or $C_7$-$C_{12}$-aralkyl,

k stands for 0 or a number from 1 to 15.

**8.** Composition according to Claims 1 to 7, containing phosphorus pentoxide as component D.2.

**9.** Composition according to Claims 1 to 8, containing anti-dripping agents.

**10.** Composition according to Claims 1 to 9, containing, as toughening agent, graft polymer B) of

B.1 5 to 95 wt % of at least one vinyl monomer on

B.2 95 to 5 wt % of one or more graft bases having glass-transition temperatures of < 10°C.

**11.** Composition according to Claim 10, wherein monomers B.1 are selected from

B.1.1. 50 to 99 parts by weight of vinyl aromatics, nucleus-substituted vinyl aromatics or $C_1$-$C_4$-alkyl methacrylates or mixtures thereof and

B.1.2 1 to 50 parts by weight of vinyl cyanides, $C_1$-$C_8$-alkyl (meth)acrylates or derivatives of unsaturated carboxylic acids or mixtures thereof.

**12.** Composition according to Claim 11, wherein monomers B1.1 are selected from at least one of the monomers styrene, $\alpha$-methylstyrene and methyl methacrylate and monomers B.1.2 from at least one of the monomers acrylonitrile, maleic anhydride and methyl methacrylate.

**13.** Composition according to Claim 12, wherein B.1.1 is styrene and B.1.2 is acrylonitrile.

**14.** Composition according to Claims 1 to 13, wherein the graft base B.2 is selected from the group comprising the diene rubbers, EP(D)M rubbers, or acrylate, polyurethane, silicon, chloroprene or ethylene/vinyl acetate rubbers or mixtures thereof.

**15.** Composition according to Claim 14, wherein the graft base B.2 is selected from diene rubbers, copolymers of diene rubbers with further copolymerizable monomers or rubber mixtures thereof, with the proviso that the glass-transition temperature of the component B.2 is below < 10°C.

**16.** Composition according to Claims 1 to 15, wherein component C is selected from one or more thermoplastic vinyl (co)polymers C.1, polyalkylene terephthalates C.2 or mixtures thereof.

**17.** Composition according to Claims 1 to 16, wherein the anti-dripping agent is fluorinated polyolefin.

**18.** Composition according to Claims 1 to 17, containing

A) 40 to 99 parts by weight of aromatic polycarbonate and/or polyester carbonate,

B) 0.5 to 60 parts by weight of a graft polymer of

B.1) 5 to 95, preferably 30 to 80 wt % of one or more vinyl monomers on
B.2) 95 to 5, preferably 20 to 70 wt % of one or more graft bases having a glass-transition temperature of < 10°C, preferably < 0°C, particularly preferably < -20°C,

C) 0 to 45, preferably 0 to 30, particularly preferably 2 to 25 parts by weight of at least one thermoplastic polymer selected from the group comprising vinyl (co)polymers and polyalkylene terephthalates,

D) 0.1 to 30 parts by weight, preferably 1 to 25 parts by weight, particularly preferably 2 to 20 parts by weight of a combination of

D.1) organic phosphorus compound and

D.2) phosphorus oxide or phosphorus sulfide and also

E) 0 to 5, preferably 0.1 to 3, particularly preferably 0.1 to 1 part by weight, in particular 0.1 to 0.5 parts by weight of anti-dripping agent,

wherein the sum of the parts by weight of the components A-E is 100.

**19.** Use of the compositions according to Claims 1 to 18 to produce moulded parts, films or sheets.

**20.** Mouldings, films or sheets, obtainable from compositions according to Claims 1 to 18.

## Revendications

**1.** Compositions contenant

A) un polycarbonate et/ou polyester-carbonate aromatique
B) un agent modifiant apportant la résistance aux chocs
C) le cas échéant un homo- et/ou co-polymère thermoplastique
D) une combinaison de

D.1 un composé phosphoré et
D.2 un oxyde de phosphore autre que D.1 ou un sulfure de phosphore autre que D.1 ou le produit de réaction de D.1 et D.2.

**2.** Composition selon revendication 1 contenant le composant D en quantité de 0,1 à 30 parties en poids.

**3.** Composition selon revendication 1 ou 2, pour laquelle D.1 est choisi dans le groupe des esters phosphorés et phosphoriques mono- et oligo-mères, des phosphonatamines et des phosphazènes et/ou leurs mélanges.

**4.** Composition selon les revendications 1 à 3 contenant en tant que composant D.1 des composés phosphorés de formule générale (III)

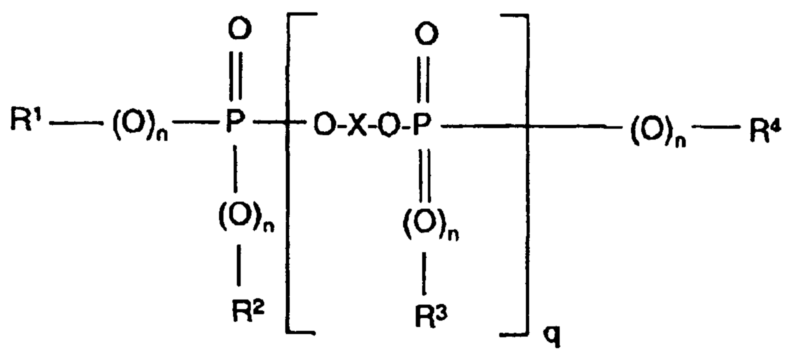

(III)

dans laquelle

$R^1$, $R^2$, $R^3$ et $R^4$ représentent chacun, indépendamment les uns des autres, un groupe alkyle en $C_1$-$C_8$ éventuellement halogéné, un groupe cycloalkyle en $C_5$-$C_6$, aryle en $C_6$-$C_{20}$ ou aralkyle en $C_7$-$C_{12}$ éventuellement substitué par des groupes alkyles et/ou des halogènes,

les indices n sont égaux chacun, indépendamment les uns des autres, à 0 ou 1,

q est un nombre allant de 0 à 30 et

X représente un radical aromatique mono- ou poly-cyclique en $C_6$-$C_{30}$ ou un radical aliphatique linéaire ou ramifié en $C_2$-$C_{30}$, qui peut porter des substituants OH et peut contenir jusqu'à huit liaisons éthers.

**5.** Composition selon revendication 4, pour laquelle le symbole X de la formule (III) représente

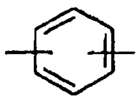 , 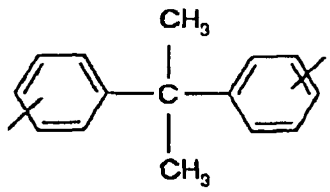 , 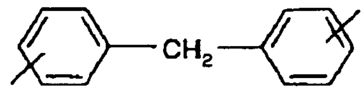 ,

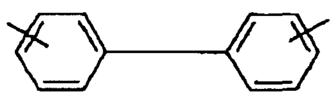

ou leurs dérivés chlorés ou bromés.

**6.** Composition selon revendication 4 ou 5 contenant en tant que composant D.1 des monophosphates, des oligo-phosphates ou des mélanges de mono- et d'oligo-phosphates.

**7.** Composition selon revendication 1 contenant en tant que composant D.1 au moins un composé choisi dans le groupe des phosphonatamines de formule (N)

$$A_{3-y}NB^1{}_y \qquad (IV)$$

dans laquelle
A représente un radical de formule (Va)

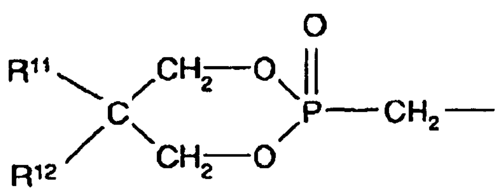 (Va)

ou (Vb)

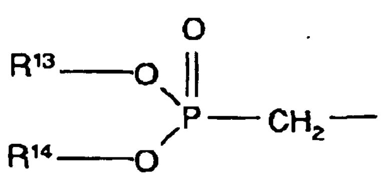 (Vb)

dans lesquelles

$R^{11}$ et $R^{12}$ représentent chacun, indépendamment l'un de l'autre, un groupe alkyle en $C_1$-$C_{10}$ substitué

ou non ou un groupe aryle en $C_6$-$C_{10}$ substitué ou non,

$R^{13}$ et $R^{14}$ représentent chacun, indépendamment l'un de l'autre, un groupe alkyle en $C_1$-$C_{10}$ substitué ou non ou un groupe aryle en $C_6$-$C_{10}$ substitué ou non, ou bien

$R^{13}$ et $R^{14}$ représentent ensemble un groupe alkylène en $C_3$-$C_{10}$ substitué ou non,

y est égal à 0, 1 ou 2 et

les symboles $B^1$ représentent chacun, indépendamment l'un de l'autre, l'hydrogène, un groupe alkyle en $C_2$-$C_8$ éventuellement halogéné, un groupe aryle en $C_6$-$C_{10}$ substitué ou non ;

dans le groupe des phosphazènes de formules (VIa) et (VIb)

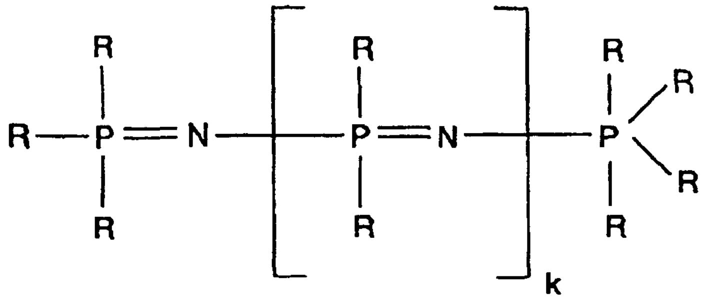

(VIa),

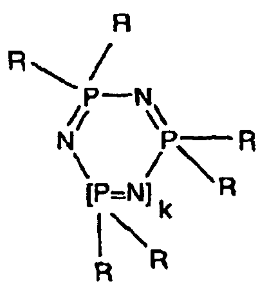

(VIb),

dans lesquelles

les symboles R représentent chacun, indépendamment les uns des autres, un groupe amino, un groupe alkyle en $C_1$-$C_8$ ou alcoxy en $C_1$-$C_8$ éventuellement halogéné, un groupe cycloalkyle en $C_5$-$C_6$, aryle en $C_6$-$C_{20}$, aryloxy en $C_5$-$C_{20}$ ou aralkyle en $C_7$-$C_{12}$ éventuellement substitué par des groupes alkyles, alkyle en $C_4$ et/ou des halogènes,

k est égal à 0 ou à un nombre allant de 1 à 15.

**8.** Composition selon les revendications 1 à 7, contenant du pentoxyde de phosphore en tant que composant D.2.

**9.** Composition selon les revendications 1 à 8 contenant un agent anti-gouttage.

**10.** Composition selon les revendications 1 à 9 contenant en tant qu'agents modifiants apportant la résistance aux chocs des polymères greffés B) de

B.1 5 à 95 % en poids d'au moins un monomère vinylique sur

B.2 95 à 5 % en poids d'un ou plusieurs supports de greffage ayant des températures de transition du second ordre inférieures à 10°C.

**11.** Composition selon revendication 10 pour laquelle les monomères B.1 sont choisis parmi les suivants

B.1.1 50 à 99 parties en poids de monomères vinylaromatiques, de monomères vinylaromatiques substitués dans les cycles ou de méthacrylates d'alkyle en $C_1$-$C_4$ ou leurs mélanges et

B.1.2 1 à 50 parties en poids de cyanures de vinyle, de (méth)acrylates d'alkyle en $C_1$-$C_8$ ou de dérivés d'acides carboxyliques insaturés ou leurs mélanges.

**12.** Composition selon revendication 11 pour laquelle les monomères B.1.1 contiennent au moins un des monomères suivants : styrène, $\alpha$-méthylstyrène et méthacrylate de méthyle, et les monomères B.1.2 contiennent au moins un des monomères suivants : acrylonitrlle, anhydride maléique et méthacrylate de méthyle.

**13.** Composition selon revendication 12, pour laquelle le composant B.1.1 est le styrène et le composant B.1.2 l'acrylonitrile.

**14.** Composition selon les revendications 1 à 13 pour laquelle le support de greffage B.2 est choisi dans le groupe des caoutchoucs diéniques, des caoutchoucs EP(D)M, des caoutchoucs d'acrylates, de polyuréthannes, de silicones, de chloroprène ou d'éthylène/acétate de vinyle ou leurs mélanges.

**15.** Composition selon revendication 14 pour laquelle le support de greffage B.2 est choisi parmi les caoutchoucs diéniques, les copolymères de caoutchoucs diéniques et d'autres monomères copolymérisables ou les mélanges de caoutchoucs de ce type, sous réserve que la température de transition du second ordre du composant B.2 soit inférieure à 10°C.

**16.** Composition selon les revendications 1 à 15 pour laquelle le composant C consiste en un ou plusieurs (co)polymères vinyliques thermoplastiques C.1, téréphtalates de polyalkylènes C.2 ou leurs mélanges.

**17.** Composition selon les revendications 1 à 16 pour laquelle l'agent antigouttage est une polyoléfine fluorée.

**18.** Composition selon les revendications 1 à 17, contenant

A) 40 à 99 parties en poids d'un polycarbonate et/ou polyester-carbonate aromatique
B) 0,5 à 60 parties en poids d'un polymère greffé de

B.1) 5 à 95, de préférence 30 à 80 % en poids d'un ou plusieurs monomères vinyliques sur
B.2) 95 à 5, de préférence 70 à 20 % en poids d'un ou plusieurs supports de greffage ayant une température de transition du second ordre inférieure à 10°C, de préférence < 0°C et dans les meilleures conditions < -20°C,

C) 0 à 45, de préférence 0 à 30 et plus spécialement 2 à 25 parties en poids d'au moins un polymère thermoplastique choisi dans le groupe des (co)polymères vinyliques et des téréphtalates de polyalkylène,
D) 0,1 à 30 parties en poids, de préférence 1 à 25 parties en poids et plus spécialement 2 à 20 parties en poids d'une combinaison de

D.1) un composé organique phosphoré et
D.2) un oxyde de phosphore ou un sulfure de phosphore et

E) 0 à 5, de préférence 0,1 à 3 et plus spécialement 0,1 à 1 partie en poids, dans les meilleures conditions 0,1 à 0,5 partie en poids d'un agent antigouttage,

la somme des parties en poids des composants A à E représentant 100 parties.

**19.** Utilisation des compositions selon les revendications 1 à 18 pour la fabrication de pièces moulées, de feuilles et de plaques.

**20.** Corps moulés, feuilles ou plaques obtenus à partir des compositions selon les revendications 1 à 18.